# EUROPEAN PATENT SPECIFICATION

(11) **EP 1 690 455 B1**
(45) Date of publication and mention of the grant of the patent: **13.08.2008**
(21) Application number: 06101500.4
(22) Date of filing: 10.02.2006
(51) Int. Cl.: A22C 15/00

(54) **Transport loop**
Transportschleife
Boucle de transport

(30) Priority: 11.02.2005 NL 1028251
(43) Date of publication of application: 16.08.2006
(73) Proprietor: TRMV Products B.V., 5062 Jm Oisterwijk (NL)
(72) Inventor: Verbeek, Marcelis Cornelis Antonius Hubertus, 5045 ME, Tilburg (NL); Reijenga, Tjerk, 5062 JM, Oisterwijk (NL)
(74) Representative: van Westenbrugge, Andries

(56) References cited:
- WO-A-85/00956
- WO-A-20/05002347
- US-A- 1 473 204

## Description

The present invention relates to a transport loop according to the preamble of claim 1.

Such a transport loop is disclosed in US 1 473 204. This consists of a central part and two ends fitted thereon in a hinged manner.

In WO 85/00956 a transport loop manufactured by injection moulding is described, wherein the stop part consists of a dished part manufactured by injection moulding from which the ends of the strand part extend.

Such a transport loop is used for transporting cuts of meat in slaughterhouses, between slaughterhouses and further processing sites. These transport loops are used to replace the cords used in the state of the art which are inserted manually with a threading needle. The transport loops according to WO 85/00956 also have to be inserted manually with a needle device.

A transport loop consisting of a strand part where a separate enlarged part is fitted at each end is disclosed in US 1 473 204.

WO 2005/002347 discloses a series of hanging elements.

The disadvantages of the known transport loop are the relatively high production costs and difficulties with the automated handling thereof.

The aim of the present invention is to simplify and to automate the fitting of transport loops in cuts of meat as far as possible, where the transport loops can be produced at low cost.

This aim is realised with a transport loop having the features of claim 1.

In contrast to the state of the art the stop part, the enlarged part and the strand part are manufactured as a single entity. As a result of this the production and handling costs can be appreciably lowered. Moreover, the enlarged part according to the present invention flips over when it comes into contact with an obstacle, such as the cut of meat. In this way the two enlarged parts together form a stop part. That is to say, according to a particular embodiment the transport loop can comprise an essentially flat part in the non-fitted state, which can be handled particularly easily and is a favourable starting point for automation.

As a result of this the transport loops can be fed in an ordered manner and are particularly suitable for mechanised further processing. With the present invention it is possible to feed a series of transport loops in the form of a mat or on a roll. In this context it is possible to connect two adjacent transport loops side by side or to connect them together in the extension of one another. Obviously a combination of the two is also possible. Consequently, it is possible to provide for feeding of the transport loops in a particularly compact and efficient manner.

In the non-fitted state of the transport loop, the enlarged parts can extend in a plane perpendicular to the plane of the strand part.

However, according to an advantageous embodiment the enlarged parts lie in the same plane as the strand part. In that case it is necessary for the enlarged parts to flip over before or on contact with the cut of meat in order to form the stop part in such a manner. By flipping over, the enlarged parts do not cut into the meat. Because of their particular shape this can occur automatically and the process can be further assisted by adding on flip lips that engage the cut of meat in a specific manner and as a result of this drive the enlarged part into a specific position.

Because, after fitting the transport loop, the cut of meat is handled by engaging the transport loop, it is important that the strand part has an appreciable strength. The largest loads are, however, shock loads that arise during transport of the cut of meat suspended from the strand part, such as in a lorry. Hence it is important that the strand part has an appreciable strength. This specific strength is less important for the enlarged parts that together form the stop part. Therefore according to an advantageous embodiment of the invention the strength of the strand part is greater than the strength of the enlarged parts. This can be achieved by strengthening the strand parts, that is to say by subjecting these to a deformation step. It is also possible to make the strand part from another material, for example a textile-like material. It is also possible to make the strand part from a material that is used for binding objects such as packages.

The transport loop described above can be manufactured in any way known in the art. Injection moulding is mentioned as an example. However, it is also possible to manufacture the transport loop consisting of the strand part and the enlarged parts by punching from a flat sheet or in another way. Depending on the technique, specific additional steps can be taken to increase the strength of the strand part.

According to a further advantageous embodiment of the invention, at least a part of the transport loop is made from a material that can be detected by machine. By this means checks can be made in a simple manner as to whether transport loops or parts thereof are situated in an undesirable manner or in undesirable places in the cut of meat. In this way it is possible on subsequent processing of the cut of meat to prevent remains of the transport loops being left behind unintentionally.

According to a further advantageous embodiment of the invention, the transport loop is made such that it can contain unique information. For example, it is possible to make the enlarged part and/or the strand part such that they can be printed. Moreover, it is possible to incorporate chips or the like therein that are or can be provided with a unique code. It is also possible to incorporate unique coded material in the transport loop (specific grain structures). The incorporation of information is important because the aim is increasingly to be able to monitor as far as possible the movements of the cut of meat from the animal to the definitive product.

According to a further advantageous embodiment of the invention, after inserting the transport loops in the above manner a series of cuts of meat is immediately automatically transported further by engaging hooks, fingers or the like in the loops. That is to say it is no longer necessary such as in the state of the art to hang the cuts of meat manually in transport hooks made of, for example, plastic or stainless steel. This is possible by accurately positioning the cuts of meat with respect to a conveyor.

The invention will be explained in more detail below with reference to illustrative embodiments shown in the drawing. In the drawing:
Fig. 1 shows diagrammatically the transport loop according to the invention in the non-fitted state;
Fig. 2 shows a number of transport loops according to the present invention that have been connected into a series;
Fig. 3 shows the first stage in the insertion of a transport loop into a cut of meat;
Fig. 4 shows a further stage in the insertion of a transport loop into a cut of meat;
Fig. 5 shows a view of the enlarged parts after the transport loop according to the present invention has been fully fitted in a cut of meat;
Fig. 6 shows the fitting of transport loops on a conveyor;
Fig. 7 shows the removal of cuts of meat from a conveyor belt, and
Fig. 8 shows a further variant of the transport loop according to the present invention.

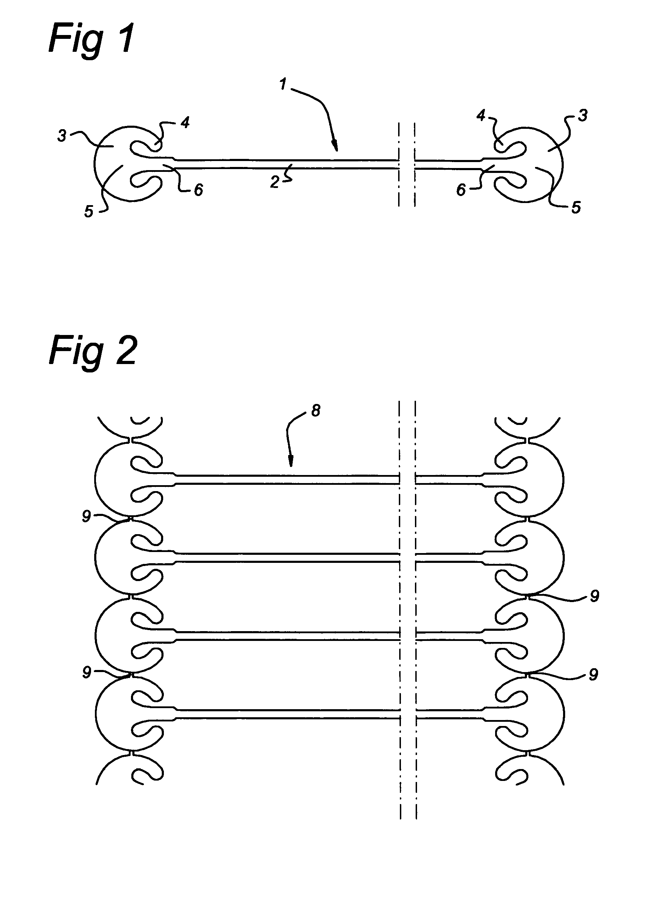

A transport loop before fitting is indicated in its entirety by 1 in Fig. 1. This consists of a strand part 2 with enlarged parts 3 at both ends. Each enlarged part 3 consists of two flip lips 4 opposite one another and a central bearing surface. The transition from the enlarged part and more in particular the bearing surface 5 to the strand part 2 is made somewhat enlarged and this is indicated by 6. The transport loop shown in Fig. 1 is an essentially flat object. However it is also possible that the transport loop is made such that the strand part 2 lies in one plane and the enlarged parts lie in another plane that is at an angle to this.

The material used for the transport loop can be any material known in the state of the art. Preferably this is a part obtained by injection moulding of plastic. More particularly after injection moulding a tensile load is applied to the strand part, possibly at elevated temperature, as a result of which this is stretched and orientation of molecules takes place in such a way that the tensile strength of the strand part increases. It must be understood that, for example, in the case of injection moulding other methods of strengthening the strand part are also possible, such as by inlaying specific other sections, such as textile sections. During the production, chips or similar identification means can also be introduced. In principle any sort of material can be used that is suitable for injection moulding or other appropriate treatment for manufacturing the transport loop. Moreover, this can have any desired colour. In particular this is the colour blue because this is usual in the food processing industry.

A series of transport loops as described above is shown coupled to one another in Fig. 2. At the enlarged parts bridges 9 linking these enlarged parts have been made perpendicular to the longitudinal direction of the strand part 2. In this way it is possible to feed a series of transport loops in the form of a mat to an installation to be described below. These mats can be transported in crates. It is also possible to roll all this up.

It will be understood that linking adjacent transport loops to one another is also possible in the extension of two transport loops in each case.

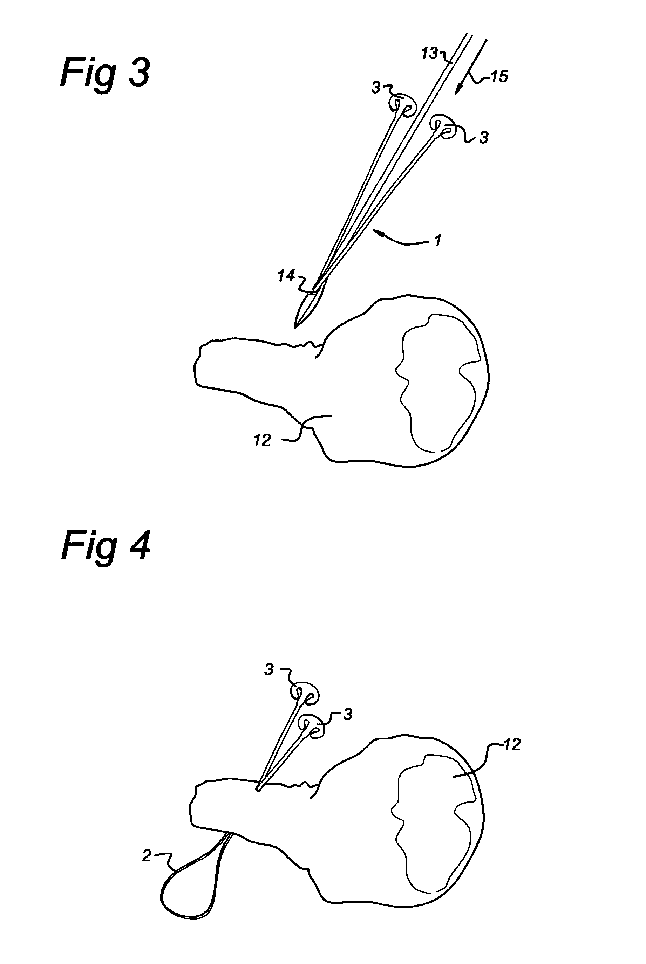

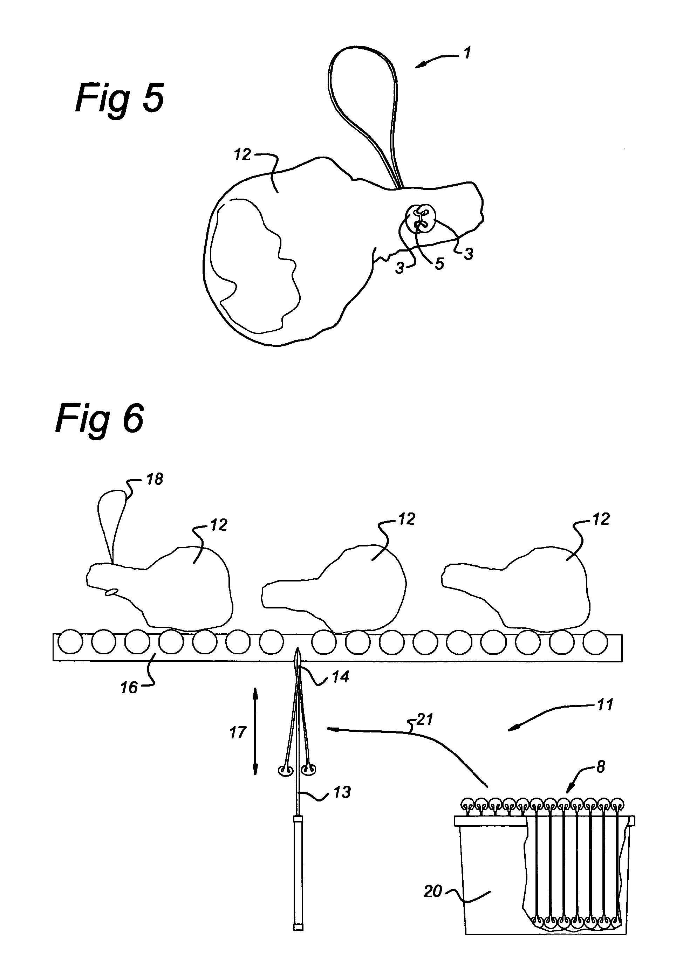

A cut of meat that has to be provided with a loop is indicated diagrammatically by 12 in Fig. 3. A needle provided with a notch 14 in which the strand part 2 of a transport loop 1 can be inserted is indicated by 13. The needle 13 is subsequently moved in the direction of the arrow 15, taking with it the strand part 2 located in the notch 14. The needle with the strand part 2 then moves into the cut of meat, so as is shown in Fig. 4. The enlarged parts still lie in the same plane as the strand parts 2. As the strand part 2 is pulled through further, for example by pushing the needle 13 through further or pulling on the strand part protruding from the cut of meat, the enlarged parts 3 come into contact with the cut of meat. Because of the presence of the flip lips 4, these enlarged parts 3 will fold outwards and the situation shown in Fig. 5 will arise. In this way the bearing faces 5 will rest against the cut of meat, as a result of which a stop part is provided. The cut of meat is provided with the transport loop in this manner. Because the transport loop is made as shown in Fig. 1, mechanical handling is possible in a simple manner.

An example of such a mechanical handling is shown in Fig. 6 as an example. An installation for inserting transport loops into cuts of meat 12 is indicated in this figure by 11. These cuts of meat 12 are all placed on a conveyor 16 in essentially the same position. This positioning can be achieved with vision technique and gripping techniques. After one of the transport loops 1 according to the invention from a crate or cassette 20 has first been placed in the notch 14 of needle 13 in the direction of arrow 21, needle 13 then moves upwards in the direction of arrow 17. The transport loop is then positioned such as shown with reference to Figs 2-5 and the situation shown diagrammatically on the left of Fig. 6 arises.

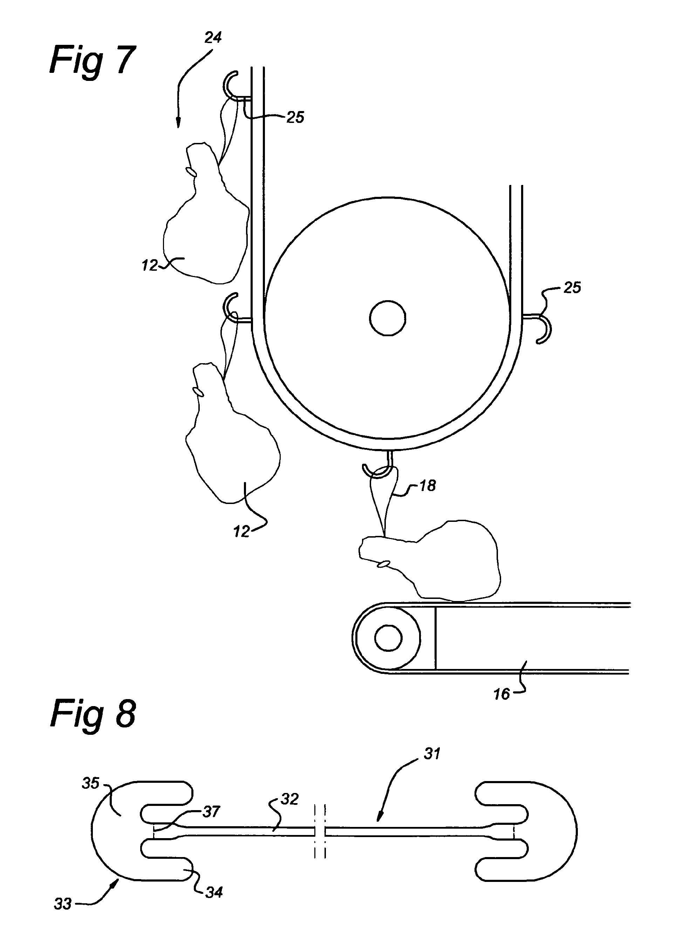

The construction according to Fig. 6 is shown at a downstream location in Fig. 7. Here, a hook conveyor 24 is shown with hooks 25. These engage in the loops 18 protruding from the cut of meat. All this can be implemented in a fully automated manner. Consequently a great deal of manual labour is saved.

According to a further variant of the present invention it is possible that before dividing a carcass or the like into cuts of meat a series of the transport loops according to the invention can already be inserted and the splitting up into different cuts of meat takes place at a later stage.

In order to prevent undesirable (remains of the) transport loops being left behind, these can preferably be detectable by machine. This can be achieved by addition of a detectable material to the plastic. However, there are also other possibilities in the state of the art for detecting objects that could be applied here.

A further transport loop according to the present invention is indicated in its entirety by 31 in Fig. 8. This also consists of a strand part 32 and enlarged parts 33. Each enlarged part 33 consists of a central bearing surface 35 and flip lips 34 extending from this. The length of the lips is somewhat greater than in the previous embodiment in order to facilitate flipping over of the lips. This flipping over is facilitated yet further by the presence of notches 37 in the transition section between strand part 32 and bearing surface 35.

It has been found that the transport loops described above can be fitted simply in a mechanised manner and any risk of slipping out of the meat during transport or heavy loading is completely eliminated.

After reading the above description variants will be immediately apparent to those skilled in the art that are obvious in the light of the above and fall within the scope of the appended claims.

## Claims

1. Transport loop (1, 31) for suspending and transporting cuts of meat (12) comprising a strand part (2, 32), which can be folded into a loop for engagement by a hook (25) or the like, and a stop part for engagement with said cut of meat, wherein the strand part (2, 32) is delimited at both ends by an enlarged part (3, 33), wherein said enlarged parts are embodied such that these enlarged parts (3, 33) together form the stop part, **characterised in that** said strand part and said enlarged parts are a single entity and said enlarged parts (3, 33) are capable of flipping over when contacting an obstacle, without cutting said obstacle, said enlarged parts being provided with flip lips (4, 34).

2. Transport loop according to one of the preceding claims, wherein said strand part comprises a material with a greater tensile strength than the tensile strength of the material of the enlarged part.

3. Transport loop according to one of the preceding claims, comprising a material that can be detected by machine.

4. Transport loop according to one of the preceding claims, comprising a material provided with a unique code.

5. Transport loop according to one of the preceding claims, wherein in the non-fitted position this is an essentially exclusively flat part.

6. Series (8) of transport loops (1) according to one of the preceding claims, wherein said transport loops are connected (9) to one another at the enlarged parts in the direction perpendicular to the longitudinal direction of said strand parts.

7. Series of transport loops (1) according to one of Claims 1 - 5, wherein said loops are connected to one another at the enlarged parts in the extension of the longitudinal direction of the strand parts.

8. Method for fitting a transport loop in a cut of meat comprising inserting a transport loop for suspending and transporting cuts of meat comprising a strand part, which can be folded into a loop for engagement by a hook or the like, and a stop part for engagement with said cut of meat, wherein the strand part is delimited at both ends by an enlarged part, wherein said enlarged parts are made such that these enlarged parts together form the stop part, wherein said strand part and said enlarged parts are a single entity and said enlarged parts (3, 33) are capable of flipping over in a cut of meat (12), moving a portion of said strand part through the cut of meat to the outside and, by applying tension to said strand part and contact of said enlarged part with said cut of meat, flipping over said enlarged part.

9. Method according to Claim 8, wherein said enlarged part has flip lips for initiating said flipping over of said enlarged part.

10. Method according to Claim 9, wherein said transport loop oriented essentially vertically is moved from below upwards.

11. Method for handling cuts of meat provided with a transport loop for suspending and transporting cuts of meat comprising a strand part, which can be folded into a loop for engagement by a hook or the like, and a stop part for engagement with said cut of meat, wherein the strand part is delimited at both ends by an enlarged part, wherein said enlarged parts are made such that these enlarged parts together form the stop part, wherein said strand part and said enlarged parts are a single entity and said enlarged parts (3, 33) are capable of flipping over, comprising placing said cuts of meat with the protruding part of the transport loop upwards and engaging said protruding transport loop parts when said enlarged parts flip over or have flipped over.

## Patentansprüche

1. Transportschleife (1, 31) zum Aufhängen und Transportieren von Fleischstücken (12), umfassend ein Strangelement (2, 32), das zu einer Schleife zum Eingreifen eines Hakens (25) oder dergleichen gefaltet werden kann, und ein Anschlagstück zum Greifen des Fleischstücks, wobei das Strangelement (2, 32) an beiden Enden durch ein Vergrösserungsstück (3, 33) abgeschlossen ist, wobei die Vergrösserungsstücke so ausgeführt sind, dass diese Vergrösserungsstücke (3, 33) zusammen das Anschlagstück bilden, **dadurch gekennzeichnet, dass** das Strangelement und die Vergrösserungsstücke eine einzelne Einheit bilden und die Vergrösserungsstücke (3, 33) in der Lage sind, bei Kontakt mit einem Hindernis umgeschlagen zu werden, ohne das Hindernis zu schneiden, wobei die Vergrösserungsstücke mit Umschlaglippen (4, 34) versehen sind.

2. Transportschleife nach dem vorhergehenden Anspruch, wobei das Strangelement ein Material mit einer größeren Zugfestigkeit als die Zugfestigkeit des Materials des Vergrösserungsstücks umfasst.

3. Transportschleife nach einem der vorhergehenden Ansprüche, umfassend ein Material, das durch eine Maschine detektiert werden kann.

4. Transportschleife nach einem der vorhergehenden Ansprüche, umfassend ein Material, das mit einer eindeutigen Kennzeichnung versehen ist.

5. Transportschleife nach einem der vorhergehenden Ansprüche, wobei diese im nicht montierten Zustand ein im Wesentlichen ausschließlich flaches Teil ist.

6. Anordnung (8) von Transportschleifen (1) nach einem der vorhergehenden Ansprüche, wobei die Transportschleifen an den Vergrösserungsstücken in der Richtung senkrecht zur Längsrichtung der Strangelemente miteinander verbunden (9) werden.

7. Anordnung von Transportschleifen (1) nach einem der Ansprüche 1 - 5, wobei die Schleifen an den Vergrösserungsstücken in der Verlängerung der Längsrichtung der Strangelemente miteinander verbunden werden.

8. Verfahren zum Anbringen einer Transportschleife in einem Fleischstück, umfassend das Einführen einer Transportschleife zum Aufhängen und Transportieren von Fleischstücken, die ein Strangelement umfasst, das zu einer Schleife zum Eingreifen eines Hakens oder dergleichen gefaltet werden kann, und ein Anschlagstück zum Greifen des Fleischstücks, wobei das Strangelement an beiden Enden durch ein Vergrösserungsstück abgeschlossen ist, wobei die Vergrösserungsstücke so ausgeführt sind, dass diese Vergrösserungsstücke zusammen das Anschlagstück ausbilden, wobei das Strangelement und die Vergrösserungsstücke eine einzelne Einheit bilden und die Vergrösserungsstücke (3, 33) in der Lage sind, in einem Fleischstück (12) umgeschlagen zu werden, das Bewegen eines Abschnitts des Strangelements durch das Fleischstück zur Außenseite und das Umschlagen des Vergrösserungsstückes durch Ziehen des Strangelementes und Kontakt des Vergrösserungsstückes mit dem Fleischstück.

9. Verfahren nach Anspruch 8, wobei das Vergrösserungsstück Umschlaglippen besitzt, die ein Umschlagen des Vergrösserungsstückes ermöglichen.

10. Verfahren nach Anspruch 9, wobei die Transportschleife, die im Wesentlichen vertikal orientiert ist, von unten nach oben aufwärts bewegt wird.

11. Verfahren für die Handhabung von Fleischstücken, die mit einer Transportschleife zum Aufhängen und Transportieren von Fleischstücken versehen sind, umfassend ein Strangelement, das zu einer Schleife zum Eingreifen eines Hakens oder dergleichen gefaltet werden kann, einem Anschlagsstück zum Greifen des Fleischstücks, wobei das Strangelement an beiden Enden durch ein Vergrösserungsstück abgeschlossen ist, wobei die Vergrösserungsstücke so hergestellt sind, dass diese Vergrösserungsstücke zusammen das Anschlagstück bilden, wobei das Strangelement und die Vergrösserungsstücke eine einzelne Einheit bilden und die Vergrösserungsstücke (3, 33) in der Lage sind, umgeschlagen zu werden, umfassend das Anordnen der Fleischstücke mit dem herausragenden Abschnitt der Transportschleife nach oben und das Greifen der Abschnitte der herausragenden Transportschleifen, wenn die Vergrösserungsstücke umschlagen werden oder umgeschlagen worden sind.

## Revendications

1. Boucle de transport (1, 31) destinée à suspendre et transporter des découpes de viande (12), comprenant une partie de ficelle (2, 32) qui peut être pliée pour former une boucle avec laquelle vient en prise un crochet (25) ou autre, et une partie d'arrêt destinée à venir en prise avec ladite découpe de viande, dans laquelle la partie de ficelle (2, 32) est délimitée aux deux extrémités par une partie agrandie (3, 33), dans laquelle lesdites parties agrandies sont matérialisées de sorte que ces parties agrandies (3, 33) forment ensemble la partie d'arrêt, **caractérisée par le fait que** ladite partie de ficelle et lesdites parties agrandies constituent une seule unité et que lesdites parties agrandies (3, 33) sont à même de pivoter lorsqu'elles entrent en contact avec un obstacle, sans couper ledit l'obstacle, lesdites parties agrandies étant pourvues de lèvres de pivotement (4, 34).

2. Boucle de transport selon revendication 1, dans laquelle ladite partie de ficelle comprend un matériau à résistance de rupture à la traction supérieure à la résistance de rupture à la traction du matériau de la partie agrandie.

3. Boucle de transport selon l'une des revendications précédentes, comprenant un matériau qui peut être détecté par une machine.

4. Boucle de transport selon l'une des revendications précédentes, comprenant un matériau pourvu d'un code unique.

5. Boucle de transport selon l'une des revendications précédentes, dans laquelle dans la position non adaptée, c'est une pièce essentiellement exclusivement plane.

6. Série (8) de boucles de transport (1) selon l'une des revendications précédentes, dans laquelle lesdites boucles de transport sont reliées (9) l'une à l'autre aux parties agrandies dans la direction perpendiculaire à la direction longitudinale desdites parties de ficelle.

7. Série de boucles de transport (1) selon l'une des revendications 1 à 5, dans laquelle lesdites boucles sont reliées l'une à l'autre aux parties agrandies dans la prolongation de la direction longitudinale des parties de ficelle.

8. Procédé pour introduire une boucle de transport dans une découpe de viande, comprenant le fait d'insérer une boucle de transport pour suspendre et transporter des découpes de viande comprenant une partie de ficelle qui peut être pliée pour former une boucle avec laquelle vient en prise un crochet ou autre, et une partie d'arrêt destinée à venir en prise avec ladite découpe de viande, dans lequel la partie de ficelle est délimitée aux deux extrémités par une partie agrandie, dans lequel lesdites parties agrandies sont réalisées de sorte que ces parties agrandies forment ensemble la partie d'arrêt, dans lequel ladite partie de ficelle et lesdites parties agrandies constituent une seule unité et lesdites parties agrandies (3, 33) sont à même de pivoter dans une découpe de viande (12), déplacer une portion de ladite partie de ficelle à travers la découpe de viande vers l'extérieur et, en appliquant une tension sur ladite partie de ficelle et par le contact desdites parties agrandies avec ladite découpe de viande, faire pivoter ladite partie agrandie.

9. Procédé selon la revendication 8, dans lequel ladite partie agrandie présente des lèvres de pivotement pour initier le pivotement de ladite partie agrandie.

10. Procédé selon la revendication 9, dans lequel ladite boucle de transport orientée essentiellement verticalement est déplacée de bas en haut.

11. Procédé pour manipuler des découpes de viande pourvues d'une boucle de transport pour suspendre et transporter des découpes de viande comprenant une partie de ficelle qui peut être pliée pour former une boucle avec laquelle vient en prise un crochet ou autre, et une partie d'arrêt destinée à venir en prise avec ladite découpe de viande, dans lequel la partie de ficelle est délimitée aux deux extrémités par une partie agrandie, dans lequel lesdites parties agrandies sont réalisées de sorte que ces parties agrandies forment ensemble la partie d'arrêt, dans lequel ladite partie de ficelle et lesdites parties agrandies constituent une seule unité et lesdites parties agrandies (3, 33) sont à même de pivoter, comprenant le fait de placer lesdites découpes de viande avec la partie saillante de la boucle de transport vers le haut et de venir en prise avec lesdites parties de boucle de transport saillantes lorsque lesdites parties agrandies pivotent ou ont pivoté.
